# EUROPEAN PATENT APPLICATION

(11) **EP 3 656 512 A1**
(43) Date of publication of application: **27.05.2020**
(21) Application number: 18382836.7
(22) Date of filing: 21.11.2018
(51) Int. Cl.: B25J 9/16, B25J 9/08

(54) **DEVICE, SYSTEM AND METHOD FOR PLUG-AND-PLAY INTEGRATION OF COMPONENTS IN ROBOTIC SYSTEMS**

(71) Applicant: Erle Robotics, S.L., 01006 Vitoria-Gasteiz (ES)
(72) Inventor: MUGURUZA GOENAGA, IÑIGO, 01006 Vitoria-Gasteiz (ES); MUÑIZ ROSAS, ADAY, 01006 Vitoria-Gasteiz (ES); FLORES MUÑOZ, JUAN, 01006 Vitoria-Gasteiz (ES); IBÁÑEZ BURGOS, CARLOS, 01006 Vitoria-Gasteiz (ES); MAYORAL VILCHES, VÍCTOR, 01006 Vitoria-Gasteiz (ES)

(57) **Abstract**

A device, system and method for plug-and-play integration of components in robotic systems is provided. According to the present invention, components such as sensors may be seamlessly incorporated to a robot ecosystem thanks to the employment of dedicated hardware devices providing all configuration abstractions needed to produce the integration. In some embodiments, information models of preferred robotic middlewares are employed to transform raw component data into robotic middleware data.

## Description

### Technical Field

The present invention relates to the field of robotics and more specifically to devices, systems and methods for integrating components dynamically in robotic systems.

### Background Art

To this day, the integration of new components, such as sensors or servo-motors, in robotic systems powered by specific robotic middlewares, such as the Robot Operating System (ROS), requires all of following steps: a) integrate a new component in a printed circuit board (PCB) which may in turn be part of a given system, b) capture the data packages produced by the new component, and c) make the transformations needed so that said data packages can be interpreted by the system, that is, transform them appropriately for the specific robotic middleware that is being employed.

According to the described methodology, additional integration and programming efforts must be made for any new component that gets integrated as specific PCB designs, different communication protocols and appropriate operation commands are required on a case-by-case basis. Therefore, there is a need to find a way for simplifying such efforts by providing a technology that allows new components to seamlessly work in a robotic system by simply connecting them to it.

### Summary of invention

The present invention provides a device, system and method for integrating, on a plug-and-play basis, new components in a robotic system, said device comprising a plurality of external communication ports integrated into a carrier board or printed circuit board (PCB) further connected to a system on module (SoM) or similar embedded system with further external communication ports, everything integrated on a small case easy to install in different parts of a robot.

Provided with the minimum electronics and configuration needed for enabling seamless communications, the disclosed device allows for the integration of a wide plurality of different components, such as sensors or servo-motors from different manufacturers, in a robotic system, that may be powered with ROS 2, by simply plug-and-playing said component, without further cumbersome programming tasks.

Additionally, a system and method for implementing the disclosed invention by means of the disclosed device are also provided. Embodiments of the present invention may provide for the integration of different kinds of components and examples of such may include devices comprising wireless modules or additional microcontrollers.

### Brief description of drawings

To complement the description that is being made and to aid towards a better understanding of the characteristics of the invention, in accordance with a preferred example of practical embodiment thereof, a set of drawings is attached as an integral part of said description wherein, with illustrative and non-limiting character, the following has been represented:
Figure 1 is a plan view of the device for plug-and-play integration comprising different parts.
Figure 2 is a representation of a series of interconnected devices and apparatuses making up a system for deploying the disclosed invention.
Figure 3 is a flow diagram providing an overview of a method for integrating robot components in robotic systems according to the disclosed invention.
Figure 4 is a flow diagram providing an overview of an alternative integration method, wherein an additional microcontroller is added.

### Description of embodiments

The present invention discloses, in three differentiated parts, a device, a system and a method for plug-and-play integration of components in robotic systems. For the purpose of better understanding of the present invention, a device comprising different electronics is firstly described as basis for further developments. Secondly, a system comprising the disclosed device and other apparatuses, such as sensors or robotic devices, is likewise described as means for, finally, providing a method for implementing the whole scope of the invention.

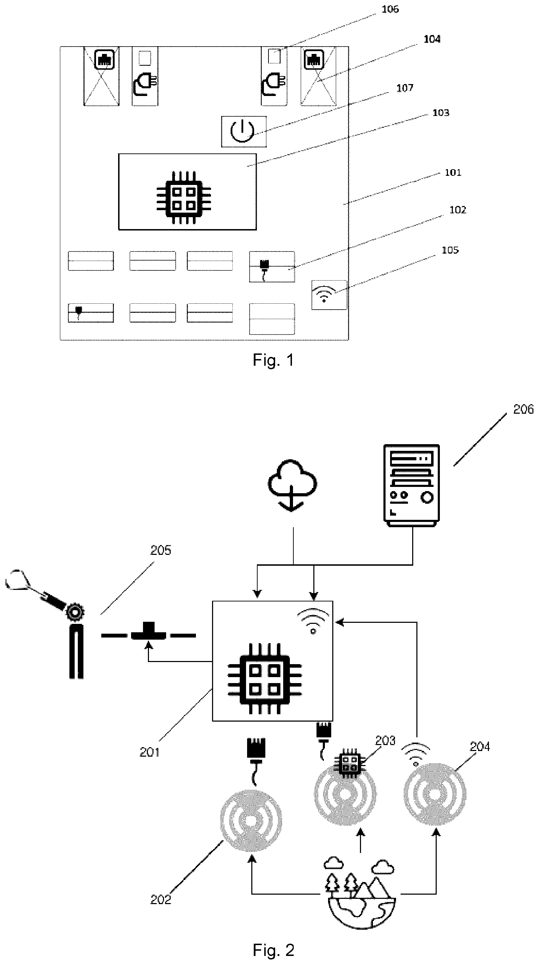

References are firstly made to Fig. 1, where different parts of the disclosed device have been represented, namely a printed circuit board (PCB) or carrier board (101) where, by way of example and not limitation, following elements may be included: a plurality of pins for component connection via connectors and implementation of wired communications (102), at least one embedded system for data package processing (103), a plurality of communication ports for external communication with the system whereto the device may get integrated (104), at least one wireless communication module for wireless communications (105), at least one power supply connector (106) and at least one power module for power distribution (107). Minor electronic components, such as resistors or capacitors, may not be represented nor mentioned without preventing the invention from being fully understood and implemented by those skilled in the art.

In some embodiments, the different parts or electronic components of the disclosed device may be implemented on a carrier board (101), which may in turn be a printed circuit board (PCB) whose dimensions and circuitry may vary depending on the concrete application but include one or more of the aforementioned electronic components. Concretely, the disclosed device provides for a series of pins for component connection via connectors and implementation of wired communications (102) wherein one or more of the pins may be configured to implement one or more of following communication protocols, which are typical in robotics: a) Controller Area Network (CAN), b) Inter-Integrated Circuit (I²C), c) Universal Asynchronous Receiver-Transmitter (UART), and d) Serial Peripheral Interface (SPI).

Additionally, different General Purpose Input/Output (GPIO) pins may be provided for other tasks to be implemented in some embodiments of the present invention (e.g. for configuring sensors that may not be steadily transmitting information but when new data is available). Additionally, the RS-485 protocol may also be provided by way of forking one or more UART ports through one or more transceivers (e.g. PHY integrated circuits). Therefore, while provided with pins for a plurality of communication protocols, different sensors or other components employing different communication protocols may be connected to the carrier board and work seamlessly as communication and power supply are likewise guaranteed.

The carrier board may further comprise at least one embedded system (103), that may in turn be a SoM provided with one or more of the characteristics described in patent application P201830926, which is intended to be included in the present disclosure as necessary background art for a preferred implementation of the invention. Briefly summarizing, a SoM may provide with the needed basic abstractions for a smoother integration of components while allowing to concentrate the most cumbersome development tasks in a single apparatus that does not require to be modified for each specific application. For the purpose of the present disclosure, the SoM or any other apparatus with same or similar functionality may provide further pins for connection to the pins hosted in the carrier board.

In some embodiments, as a SoM or similar embedded system may not be able to directly implement the signals of certain communication protocols, such as CAN, additional transceivers (e.g. PHYs) may need to be included in the connectors in order to transform said signals appropriately, so that they may be manageable by the electronics (e.g. processing units) included in such apparatuses, the system further providing corresponding digital buses connected to the SoM to process the converted digital signals.

Additionally, the carrier board may provide with communication ports for external communication with the system whereto the device may get integrated (104), said ports typically featuring the form of RJ-45 for Ethernet communications as Ethernet is a typical interface for most robotic applications. However, in some embodiments, communication ports featuring other standards, such as EtherCAT, Profinet, Profibus, DeviceNet, Ethernet/IP, TSN, Modbus or CAN, may also be provided. For the case of Ethernet, further PHYs or transceivers may intercede the communications between a SoM and a robotic system through Ethernet ports.

In some embodiments, the carrier board may further comprise at least one wireless communication module for wireless communications (105) between the disclosed device (201) and other devices comprising sensors issuing wireless or radiofrequency communications related to data registered by the sensors (204). Preferably, the wireless communication module (105) arranged on the carrier board (101) may further comprise a chip or integrated circuit by which digital signals coming from a SoM (or similar embedded system) may be switched into radiofrequency signals, which may additionally be transmitted to the other devices by means of an antenna.

On the other hand, said other devices comprising sensors (203) may be furnished with a processing unit to capture sensor data and a battery-powered module for power requirements of the whole device, including the sensor. Likewise, said devices may be furnished with a further chip to transform digital signals of the sensor into radiofrequency signals to be transmitted to the wireless communication module through an antenna. Typical wireless communication protocols may include: 6LoWPAN, Bluetooth Low Energy (BLE), Zigbee and Wi-Fi.

Additionally, the carrier board may be provided with at least one power supply connector (106), that may receive up to 48V from an external source, and a power module for power distribution (107) of the received voltage. In some embodiments, said power module may feature some characteristics of a power management integrated circuit (PMIC) comprising low-dropout (LDO) regulators that may transform a 48V power supply into a plurality of supplementary 5V or lower supplies (e.g. 3.3V, 1.8V, 2.5V, etc.) for different applications (e.g. sensors, small servo-motors). For further information related to PMICs or power management modules for robot applications, a global prior art reference is made to patent application PCT/ES2018/070570.

References are now made to Fig. 2, where a representation of a series of interconnected devices and apparatuses making up a system for deploying the disclosed invention is provided. A system of the disclosed invention may comprise a device for plug-and-play integration of components in robotic systems (201) as represented in Fig. 1; one or more components to be integrated (202), including devices comprising sensors and additional microcontrollers (203) and devices including sensors and modules for producing wireless communications (204); at least one robotic device (e.g. a robot, a robot module, etc.) whereto a component may be integrated (205) and, eventually, a database for updates (206), that may in turn be a PC, a local server or a cloud server, among others.

In some embodiments, the present invention may relate to different apparatuses (e.g. robots, modular robots, robot modules, sensors, other robot components, etc.) comprising systems (e.g. modular robotic system, system on a robot module, other embedded systems, etc.) furnished with one or more processors as well as storage media further comprising computer instructions that, when a new component is connected, are executed in said processors thereby causing the realization of certain operations according to the method disclosed hereinafter.

While the device for plug-and-play integration of components in robotic systems (201) and its characteristics have been described above with reference to Fig. 1, references are now made to the rest of devices and apparatuses that may be comprised in an exemplary system, according to the present invention.

In some embodiments, the one or more components to be integrated (202, 203, 204) may be sensors or the combination of sensors with other elements. Generally, sensors are devices with reduced computing capabilities that detect changes in their environment, capture said changes and transmit them in the form of raw data that may be managed by other devices with higher computing capabilities (e.g. furnished with processing units). As systems provided with actuators for interacting with the environment, robots may require sensors to detect such environment and act accordingly, thereby it is important to provide ways for seamlessly integrating sensors within the robot ecosystem (e.g. the robotic middleware), including ways for transmitting said raw data in a format interpretable by the system.

Generally, any sensor or other component may be integrated in the robotic system by means of the disclosed invention by simply plug-and-playing, as long as it fulfils at least one of following requirements: a) implements a communication protocol, for which connections are provided in the carrier board, that allows for a direct identification and management of the device and data, without further transformations (e.g. I²C, SPI, etc.); b) implements another communication protocol for which connections are provided and, despite not allowing for direct identification and management of the device, transmits data that is directly manageable (e.g. basic data of known, predefined parameters); c) implements any communication protocol, for which connections are provided, that does not allow for a direct identification and management of the device and data, but drivers fulfilling this gap are standardly provided in the processing unit of the SoM or similar embedded system; or d) implements any communication protocol, for which connections are provided, that does not allow for a direct identification and management of the device and data, but drivers fulfilling this gap are further provided in the processing unit of the SoM or similar embedded system by other means (e.g. manually, through updates, etc.).

Additionally, a plurality of second devices comprising sensors and furnished for producing wireless communications (204), may also be part of the system. Differently from the standard case described above, where wired communications may be implemented as sensors or other components may get connected directly to a carrier board providing the connections needed, these complementary devices (204), that may not need to be in proximity to the device for integration (201), may emit signals containing raw data captured by the sensor, said raw data further processed by the wireless communication module (105) and the SoM or similar embedded system (103) arranged in the carrier board (101) of the device for integration (201).

Lastly, the system may also comprise robotic systems (205) whereto components (202, 203, 204) may get integrated and said robotic systems may range from simple robot modules to more complex robotic systems (e.g. industrial robots, cobots, modular robots, etc.). In some embodiments, the robotic system (205) may feature at least one network interface card to which connections from the carrier board through Ethernet (104) may be built, so that communications among new components (202, 203, 204) and robotic system (205) succeed.

In some embodiments, wireless communications between the device for integration (201) and the robotic system (204) regarding some robot applications may also be performed through the at least one wireless communication module for wireless communications (105) arranged on the carrier board (101). Generally, wireless communications with the robot may be restricted solely to applications that cannot be implemented with deterministic data transmissions typically required in robotics, but that may be useful depending on the feature they might bring to the system where it is integrated (e.g. presence detectors).

As described for the prior art, the usual integration process may imply to design a PCB dedicated to each new component, such PCB containing all interfaces and electronics needed for both the component and the system whereto the integration may occur. By means of the present invention, however, a series of components may get automatically integrated into a series of robotic systems featuring communications ports implementing different communications protocols, examples of such may include Ethernet, EtherCAT, Profinet, Profibus, DeviceNet, Ethernet/IP, TSN, Modbus and CAN, among others. Every communication protocol with the robotic system may be implemented, provided that specific connectors (106) are arranged on the carrier board (101).

Accordingly, different robotic middlewares furnished to deploy said communications standards may also be provided, examples of such including but not limited to: ROS, ROS 2, OPC Unified Architecture (OPC UA) or Yet Another Robot Platform (YARP), among others.

In order for that to happen, specific software implementations according to the employed protocol and robotic middleware may need to be implemented in the SoM or similar embedded system (103) in the form of appropriate computer instructions to be executed by one or more processing units. Likewise, specific external ports for external communication with the robotic system (106) may also need to be implemented on a case-by-case basis. Additionally, robotic systems may be provided with further wireless communications modules for managing radiofrequency signals emitted by the device for integration (201) through wireless communications modules (105).

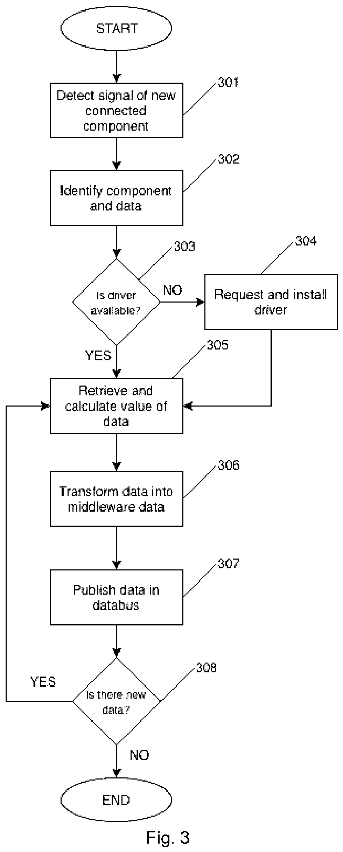

The present invention also discloses a method for plug-and-play integration of components in robotic systems, as schematically represented in Fig. 3 by means of a flow diagram. Accordingly, the method may start by providing the detection of the signal of a new connected component (301), this step comprising sending, by the new connected component, signals to one or more processing units of a SoM or similar embedded system (103) through the communication protocol that may be employed by the system.

In some embodiments, the step of detecting the signal of the new connected component (301) may succeed by simply verifying which connector or connectors are active at a given time. This way, as the sensor may be connected to the corresponding connector implementing a specific communication protocol, the same connection may determine the operations that may be performed by the processing unit of the SoM or similar embedded system (103) while identifying the new connected component, the data emitted by this (302) and, particularly if direct retrieval of data is possible as some protocols allow for it (e.g. I²C) or, if otherwise, further requirements are needed as other communications, such as serial, may not allow for said direct retrieval.

Concretely, to process the new data may be needed to provide the system with component drivers, either standardly or later provided, thereby operations for verifying if any needed driver is available (303) may be successively performed. If so, the processing unit may further verify if the driver is currently available and, if the needed driver is already available in memory, raw or unprocessed data generated by the component may be retrieved and its value calculated (305), said data consisting in any magnitude (e.g. temperature by a temperature sensor) or any other data (e.g. telemetry) or physical value registered by the component. In some embodiments, sensor-specific transformation operations (e.g. mathematical formulas) may be provided beforehand or otherwise be facilitated by the driver in order to calculate the value of the data (305). However, if no driver is yet available (303), specific data packages may be requested and installed (304) before the data may be retrieved (305). In some embodiments, needed drivers may be provided by the new component (202, 203, 204). In other embodiments, such drivers may be requested from a database for updates (206).

Following the data retrieval and calculations (305), data may be transformed into specific middleware data (306) of the robotic middleware employed by the robotic system that is recipient of the information registered by the components (e.g. ROS 2). In some embodiments, transformations may imply providing predefined operations for adjusting the raw data of sensors to suit into a preferred information model such as the Hardware Robot Information Model (HRIM) as common interface for any component that may get attached.

The use of an exemplary software tool as the described may facilitate to detect the essence of the hardware component and capture relevant information into a series of purpose abstractions. This information may define a basic customized information that allows system and user to seamlessly work with the component. Said customized information may be different for each component sub-type while comprising all of a kind, thereby making them interoperate, even when coming from different manufacturers. Ultimately, the component purpose may be what makes it different from other sub-types, so that it may be composed by at least a topic, a service, an action, or a mix between them, complemented by parameters. The message types generated employing the HRIM or other information model may be suitable for their employment as messages of the specific robotic middleware (e.g. ROS 2), thereby data processed by the device for integration (201) may be straightforwardly manageable by the robotic system (205).

As component linked to the robotic system (205), the device for integration (201), through the SoM or similar embedded system (201), may be able to publish messages directly in the databus (307) where communications within the robotic middleware happen. Generally, robotic middlewares may be defined as frameworks providing exchange layers with information exchange logic between robot applications. Provided that the data message fulfils the structure of messages of the specific robotic middleware, in some embodiments the SoM may create, in said databus, a message topic including the data coming from the new components (202, 203, 204) and processed in the device for integration (201). This way, the rest of components of the robotic system (e.g. robot modules) may access this information and employ it accordingly. In some embodiments, if physical interfaces such as RJ-45 for Ethernet communications are employed (104), digitally treated signals may need to be transformed into analog signals by means of further PHY transductors that may be routed to in the connectors.

Further to Fig. 3, finally, the SoM or similar embedded system may keep receiving new signals (308) from same or other components (202, 203, 204), in which case the method provides repeating the whole cycle from the step of retrieving and calculating value of data (305). If no further data is provided, the computer instructions may provide for finishing the process.

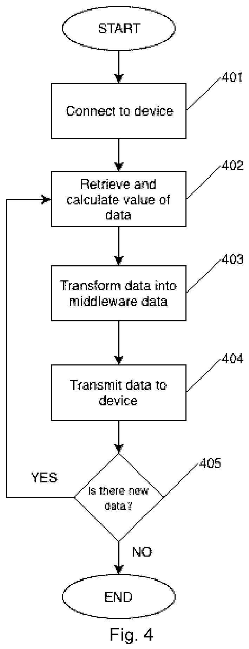

An alternative embodiment of the described method is schematically represented in Fig. 4, wherein one or more additional microcontrollers may be provided to interface communications between a sensor (203) and the device for integration (201). In some embodiments, microcontroller and sensor may be embedded together forming a same 'blackbox' device (203). The microcontroller may process a request to connect to the device for integration (401) in order to provide information on the sensor (203) to said device for integration (201). Said microcontroller may be provided with the drivers needed to calculate the value of the data retrieved from the sensor (402). Additionally, said microcontroller may be further provided with a program (e.g. same program as the program run in the SoM) executing computer instructions aiming at causing operations by which raw data of the sensor is transformed into middleware data (403) previous to being transmitted to the device for integration (404) for its later publication in the databus of a robotic middleware employed in the robotic system (307, 205), as described above with reference to Fig. 3.

Finally, the microcontroller may keep verifying if there is new data (405), in which case the method may provide for the execution of computer instructions for repeating the whole cycle from the step of retrieving and calculating value of data (402), or otherwise stopping receiving data if there is no further data to transmit.

## Claims

1. A method for plug-and-play integration of components in a robotic system, the method **characterized by** executing, on one or more processors of an embedded system for data package processing (103), computer instructions causing operations comprising: detecting a signal of a new connected component (301); identifying component and data (302); verifying if a needed driver is available (303) and, if not available, requesting and installing the driver (304); if the driver is available or installed, retrieving and calculating the value of the data (305); transforming the data into middleware data of an employed robotic middleware (306); publishing the data in a databus of a robotic middleware employed in the robotic system (307); and verifying if there is new data (308) and, if so, repeating steps from retrieving and calculating the value of the data (305); wherein the method is further **characterized in that** middleware data of an employed robotic middleware (306) comprises data adapted to an information model of the employed robotic middleware.

2. A method for plug-and-play integration of components in a robotic system according to claim 1, wherein the embedded system for data package processing (103) is a System on Module (SoM).

3. A method for plug-and-play integration of components in a robotic system according to claim 1, wherein the new connected component (301) is a device **characterized by** implementing one or more communication protocols selected from: CAN, I²C, UART, SPI, RS-485, 6LoWPAN, Bluetooth Low Energy (BLE), Zigbee and Wi-Fi.

4. A method for plug-and-play integration of components in a robotic system according to claim 1, wherein the robotic system is a device **characterized by** implementing one or more communication protocols selected from: Ethernet, EtherCAT, Profinet, Profibus, DeviceNet, Ethernet/IP, TSN, Modbus and CAN.

5. A method for plug-and-play integration of components in a robotic system according to claim 1, wherein the middleware data is **characterized by** being adapted to customized messages extracted from the Hardware Robot Information Model (HRIM).

6. A method for plug-and-play integration of components in a robotic system according to claim 1, wherein the employed robotic middleware is a framework providing exchange layers with information exchange logic between robot applications selected from: ROS, ROS 2, OPC Unified Architecture (OPC UA) and Yet Another Robot Platform (YARP).

7. A method for plug-and-play integration of components in a robotic system, the method **characterized by** executing, on one or more microcontrollers in a sensor device (203), computer instructions causing operations comprising: connecting to a device for integration (401); retrieving and calculating the value of the data (402); transforming the data into middleware data of an employed robotic middleware (403); transmitting the data to the device for integration (404); and verifying if there is new data (405) and, if so, repeating steps from retrieving and calculating the value of the data (402); wherein the method is further **characterized in that** middleware data of an employed robotic middleware (403) comprises data adapted to an information model of the employed robotic middleware; and **in that** the microcontroller is provided with the drivers needed to calculate the value of the data retrieved from the sensor.

8. A device for plug-and-play integration of components in a robotic system, the device **characterized by** comprising arranged on a printed circuit board (101): a plurality of pins for component connection via connectors and implementation of wired communications (102); one or more embedded systems for data package processing, **characterized by** comprising one or more processors (103); a plurality of communication ports for external communications with a robotic system (104); one or more wireless communication modules for wireless communications (105); one or more power supply connectors (106); and one or more power modules for power distribution (107); wherein, when a new component (202, 203, 204) is connected to the device for integration (201), computer instructions are executed on one or more processors to cause plug-and-play integration operations **characterized by** comprising: detecting a signal of a new connected component (301); identifying component and data (302); verifying if a needed driver is available (303) and, if not available, requesting and installing the driver (304); if the driver is available or installed, retrieving and calculating the value of the data (305); transforming the data into middleware data of an employed robotic middleware (306); publishing the data in a databus of a robotic middleware employed in the robotic system (307); and verifying if there is new data (308) and, if so, repeating steps from retrieving and calculating the value of the data (305); wherein the method is further **characterized in that** middleware data of an employed robotic middleware (306) comprises data adapted to an information model of the employed robotic middleware.

9. A device for plug-and-play integration of components in a robotic system according to claim 8, wherein the embedded system for data package processing (103) is a System on Module (SoM).

10. A device for plug-and-play integration of components in a robotic system according to claim 8, wherein the pins for component connection via connectors and implementation of wired communications (102) are configured to implement one or more communication protocols selected from: CAN, I²C, UART, SPI and RS-485.

11. A device for plug-and-play integration of components in a robotic system according to claim 8, wherein the wireless communication module for wireless communications (105) is configured to implement one or more communication protocols selected from: 6LoWPAN, Bluetooth Low Energy (BLE), Zigbee and Wi-Fi.

12. A device for plug-and-play integration of components in a robotic system according to claim 8, wherein the communication ports for external communications with a robotic system (104) are configured to implement one or more protocols selected from: Ethernet, EtherCAT, Profinet, Profibus, DeviceNet, Ethernet/IP, TSN, Modbus and CAN.

13. A device for plug-and-play integration of components in a robotic system according to claim 8, wherein the middleware data is **characterized by** being adapted to customized messages extracted from the Hardware Robot Information Model (HRIM).

14. A device for plug-and-play integration of components in a robotic system according to claim 8, wherein the employed robotic middleware is a framework providing exchange layers with information exchange logic between robot applications selected from: ROS or ROS 2, OPC Unified Architecture (OPC UA) and Yet Another Robot Platform (YARP).

15. A system for plug-and-play integration of components in a robotic system, the system for plug-and-play integration **characterized by** comprising: one or more devices for plug-and-play integration (201); one or more new components to be integrated (202, 203, 204); and one or more robotic devices whereto one or more components are integrated (205); wherein, when a new component (202, 203, 204) is connected to the device for integration (201), computer instructions are executed on one or more processors to cause plug-and-play integration operations **characterized by** comprising: detecting a signal of a new connected component (301); identifying component and data (302); verifying if a needed driver is available (303) and, if not available, requesting and installing the driver (304); if the driver is available or installed, retrieving and calculating the value of the data (305); transforming the data into middleware data of an employed robotic middleware (306); publishing the data in a databus of a robotic middleware employed in the robotic system (307); and verifying if there is new data (308) and, if so, repeating steps from retrieving and calculating the value of the data (305); wherein the method is further **characterized in that** middleware data of an employed robotic middleware (306) comprises data adapted to an information model of the employed robotic middleware.
